# EUROPEAN PATENT SPECIFICATION

(11) **EP 3 630 621 B1**
(45) Date of publication and mention of the grant of the patent: **13.04.2022**
(21) Application number: 18731186.5
(22) Date of filing: 23.05.2018
(51) Int. Cl.: B65B 19/10, B65B 19/28, B65B 57/14, A24C 5/35, B65G 47/51, A24C 5/32, B65B 19/04

(54) **A PACKER MACHINE FOR CYLINDRICAL SMOKING ARTICLES AND PROVIDED WITH AN HOPPER**
MIT EINEM TRICHTER VERSEHENE VERPACKUNGSMASCHINE FÜR ZYLINDRISCHE RAUCHARTIKEL
MACHINE D'EMBALLAGE DESTINÉE À DES ARTICLES À FUMER CYLINDRIQUES ET POURVUE D'UNE TRÉMIE

(30) Priority: 23.05.2017 IT 201700055502
(43) Date of publication of application: 08.04.2020
(73) Proprietor: G.D Società per Azioni, 40133 Bologna (IT)
(72) Inventor: FORTINI, Massimo, 40057 Granarolo Emilia (BO) (IT); VILLA, Stefano, 40064 Ozzano Emilia (BO) (IT); FEDERICI, Luca, deceased (IT)
(74) Representative: Maccagnan, Matteo
(86) International application number: PCT/IB2018/053652
(87) International publication number: WO 2018/215948

(56) References cited:
- WO-A1-2016/042135
- US-A- 4 120 391
- US-A- 4 120 391
- US-A- 4 350 242
- US-A- 4 350 242
- US-A1- 2004 104 240
- US-A1- 2004 104 240

## Description

### PRIORITY CLAIM

*This application claims priority from* Italian Patent Application No. 102017000055502, filed on 23/05/2017.

### TECHNICAL FIELD

The present invention relates to a packing machine for smoking articles with a cylindrical shape.

The present invention finds advantageous application to a packing machine for cigarettes. In particular, but not exclusively, a packing machine that makes packs of cigarettes called *"twin",* each containing two groups of cigarettes that are distinct from one another in separate wraps, to which the following discussion will make explicit reference without thereby any loss of generality.

### PRIOR ART

A packing machine for cigarettes comprises a forming unit for forming groups of cigarettes, which receives at input, a mass of cigarettes fed along a feeding channel and supplies at output, a succession of ordered groups of cigarettes which are fed towards the next wrapping line.

A forming unit for forming groups of cigarettes comprises a vertical hopper, which has an upper input portion connected to the channel for feeding the mass of cigarettes and a lower portion provided with a plurality of output mouths. Each output mouth comprises a pre-set number of vertical grooves (or "veins") along each of which a row of cigarettes descends, due to gravity, and is cyclically engaged by a respective extractor which extracts an ordered group of cigarettes from the bottom of the hopper and feeds the group of cigarettes to a pocket of a forming conveyor and is stationary in front of the output mouth. Each extractor is comb-like shaped and has a number of teeth which transversely cross the grooves of the output mouth so as to push the group of cigarettes out of the grooves and feed the group of cigarettes to the pocket of the forming conveyor.

In use, a cigarette hopper is completely filled with a mass of cigarettes, which are fed by the feeding channel, descend, due to gravity, along the hopper and all have the same longitudinal orientation which is necessary to allow the cigarettes to enter the vertical grooves leading to the output mouths; as the groups of cigarettes are extracted from the output mouths, the cigarettes descend, due to gravity, along the hopper and new cigarettes are fed into the hopper through the feeding channel. It may happen that during the descent along the hopper, due to gravity, a cigarette may lay *"crosswise",* i.e. transversely relative to the other cigarettes; a *"crosswise"* cigarette fails to enter a vertical groove that leads to an output mouth and leans over the input of some of the adjacent vertical grooves, forming a barrier that also prevents the other correctly aligned cigarettes from entering said vertical grooves. When a cigarette lays in a crosswise direction it is often necessary to interrupt the operation of the packing machine (or at least a part of the packing machine which uses the output mouth blocked by the *"crosswise"* cigarette) and the intervention of an operator who manually eliminates the *"crosswise"* cigarette is necessary.

It has been observed that the number of *"crosswise"* cigarettes tends to increase as the cigarette length decreases and tends to increase when the cigarettes have a slightly conical shape (i.e. not perfectly cylindrical).

The patent US5464027A describes a hopper for traditional cigarettes.

The patent application WO02083502A1 describes a feeding unit for feeding cigarettes to a packing machine that is provided with a cigarette hopper and a device for compensating the portion of the mass of cigarettes extracted in groups from the hopper and fed into a plurality of trays supported and moved by a conveyor; the compensating device is arranged inside the hopper and is provided with an articulated mechanism defining a movable compensating wall and a pair of lateral conveyors converging towards the articulated mechanism, and is in relation to a step with a device for extracting the groups of cigarettes from the hopper in order to vary the capacity of the latter according to the volume corresponding to the extracted cigarettes.

### DESCRIPTION OF THE INVENTION

The object of the present invention is to provide a packing machine for smoking articles with a cylindrical shape, said packing machine is provided with a hopper that allows the number of *"crosswise"* cigarettes to be reduced and is, at the same time, easy and inexpensive to implement.

According to the present invention a packing machine for smoking articles with a cylindrical shape is provided, as claimed in the attached claims.

The claims describe preferred embodiments of the present invention forming an integral part of the present disclosure.

### BRIEF DESCRIPTION OF THE DRAWINGS

The present invention will now be described with reference to the accompanying drawings, which illustrate an example of a non-limiting embodiment, wherein:
- Figure 1 is a front perspective view and in a closed configuration of a *"twin"* pack of cigarettes;
- Figure 2 is a front perspective view and in an open configuration of the *"twin"* pack of cigarettes of Figure 1;
- Figure 3 is a perspective view of an inner wrap contained in the *"twin"* pack of cigarettes of Figure 1;
- Figure 4 is a perspective view of a group of cigarettes contained in the inner wrap of Figure 3;
- Figure 5 is a schematic front view of a cigarette hopper; and
- Figure 6 is a schematic plan view of a forming unit for forming groups of cigarettes which is part of a packing machine which produces the *"twin"* pack of cigarettes of Figure 1 and is provided with the cigarette hopper of Figure 5.

### PREFERRED EMBODIMENTS OF THE INVENTION

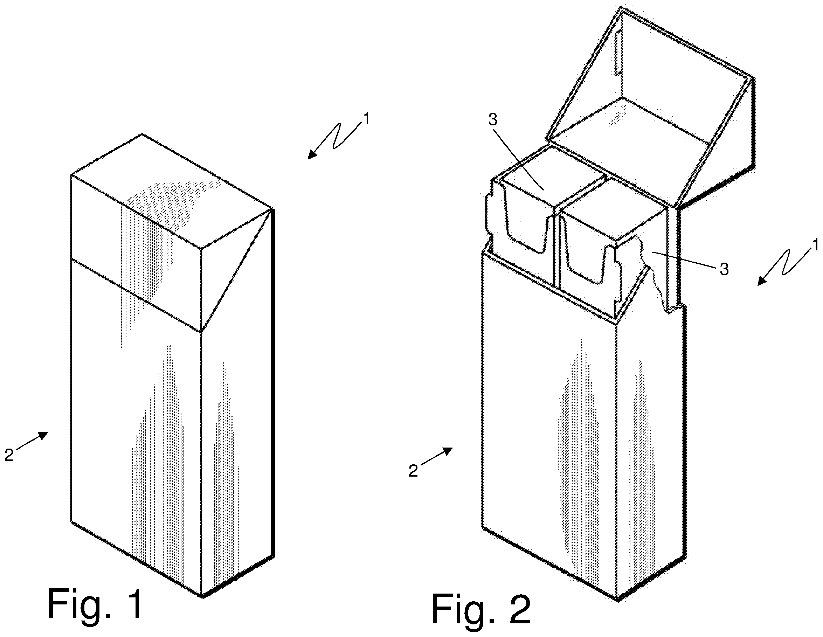

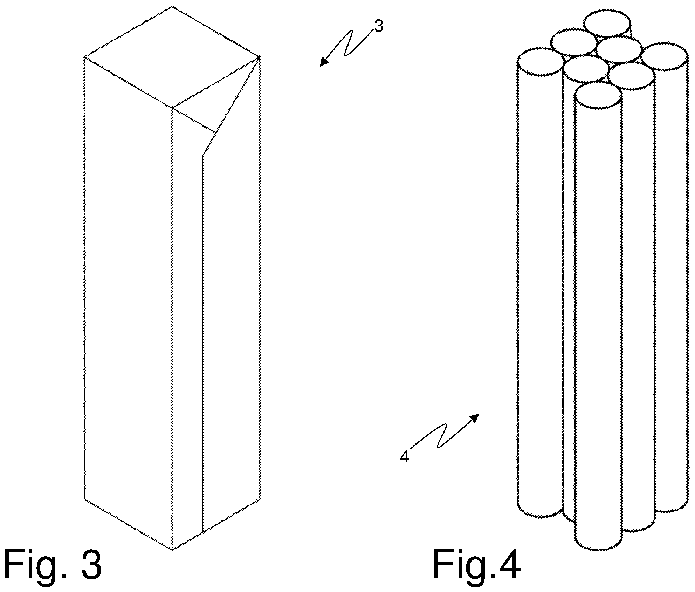

In Figures 1 and 2, number 1 denotes as a whole, a rigid *"twin"* pack of cigarettes comprising a rigid outer container 2 provided with a hinged lid and a pair of inner wraps 3, which are arranged one beside the other and are housed in the outer container 2. Each inner wrap 3 (better illustrated in Figure 3) encloses a group 4 of cigarettes (illustrated in Figure 4) with a parallelepiped shape and has, at the top, a removable tear-off portion which is removed so as to allow access to the cigarettes. The cigarettes have a cylindrical shape; in particular, they can have a perfect cylindrical shape (i.e. having a constant diameter along the entire length of the cigarette), or an imperfect cylindrical shape (i.e. with a slightly tapered shape which causes a small variation in the diameter along the length of the cigarette). Each inner wrap 3 is made by folding a wrapping sheet, in a known manner, with a rectangular shape around the group 4 of cigarettes.

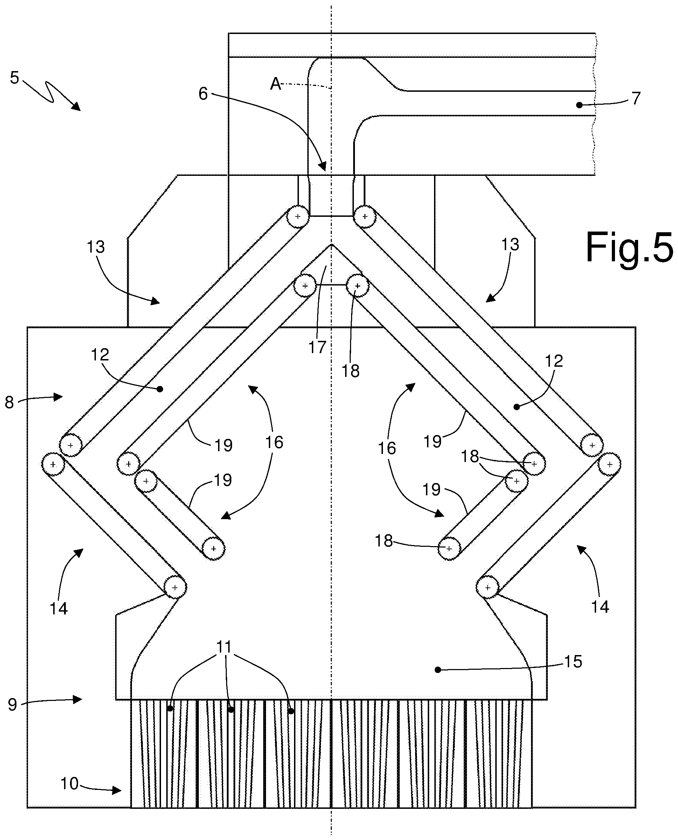

In Figure 5, number 5 denotes as a whole a cigarette hopper, which is adapted to contain a compact mass of cigarettes (not illustrated) fed to an upper input 6 of the hopper 5 by means of a horizontal feeding channel 7 being part of a cigarette packing machine (not illustrated). The hopper 5 is part (in particular an initial part) of a packing machine which makes the packs 1 of cigarettes described above.

The hopper 5, within which the cigarettes horizontally and side by side, are fed transversely to the respective axes, has a structure substantially symmetrical in respect to a vertical longitudinal axis A and comprises an upper part 8 and a lower part 9, both of which are delimited in the front portion and in the back portion by respective vertical walls.

The lower part 9 of the hopper 5 comprises six equidistant lower output mouths 10, which are closed at the bottom by respective horizontal bottom plates, are laterally delimited by respective side walls and are internally divided by a plurality of walls or partitions defining the grooves 11 within which the cigarettes are arranged in substantially vertical stacks.

The upper part 8 of the hopper 5 is divided, from the upper input 6, into two channels 12 distinct and placed in a mirrorlike manner relative to the longitudinal axis A and arranged respectively on the right and on the left of the axis A. The channels 12 have two respective initial portions 13 which diverge from one another from the top to the bottom and two respective final portions 14 which converge towards one another from the top to the bottom. Each channel 12 is inclined in respect to the vertical longitudinal axis A and, in the embodiment illustrated in Figure 5, forms an angle of 45° with the longitudinal axis A (more generally, each channel 12 forms an angle of at least 30° with the longitudinal axis A) .

The final portions 14 flow into a free chamber 15 which belongs to the lower part 9 of the hopper 5 and is arranged immediately above the output mouths 10; consequently, the cigarettes travel through the channels 12 until they reach the free chamber 15 directly (that is, the channels 12 flow into the free chamber 15) and the cigarettes from the free chamber 15 enter directly into the grooves 11 (that is, the grooves 11 originate from the free chamber 15). In other words, each channel 12 has a "V" shape rotated by 90°, wherein the two branches of the "V" are made up by the respective initial portion 13 and by the respective final portion 14. According to the (non-limiting) embodiment illustrated in Figure 5, in each channel 12 the initial portion 13 has an inclination of 45° relative to the vertical direction (i.e. relative to the longitudinal axis A) and the final portion 14 has an inclination of 45° relative to the vertical direction (i.e. relative to the longitudinal axis A) opposite to the inclination of the initial portion 13; consequently, in each channel 12, the initial portion 13 is perpendicular (i.e. angled by 90°) relative to the final portion 14. To summarize, the structure of the upper part 8 of the hopper 5 has a substantially rhomboidal shape symmetrical to the axis A which forms the larger diagonal.

Each portion 13 and 14 is delimited by two opposite belt conveyors 16 (i.e. arranged one in front of the other) and wherein a conveyor 16 is arranged above the other conveyor 16, and mutually arranged at a given distance one from the other (i.e. the two belt conveyors 16 of each portion 13 or 14 are preferably parallel and one of them is arranged in a higher position and the other in a lower position). Each pair of belt conveyors 16 defines the opposite side walls of the corresponding portion 13 or 14 of the channel 12 against which the cylindrical side walls of the cigarettes rest.

The two lower belt conveyors 16 of the initial portions 13 of the channels 12 are joined to one another by a fixed profile 17 with a triangular shape, which is arranged immediately below the upper input 6 of the hopper 5; in other words, the fixed triangular profile 17 is arranged below the upper input 6 of the hopper 5 between the two lower belt conveyors 16 of the initial portions 13 of the channels 12. The fixed profile 17 is preferably made up by a rigid metal or plastic profile.

Each belt conveyor 16 comprises two end pulleys 18 (one of which is in a higher position and the other is in a lower position) and a conveyor belt 19 which is wound in a loop around the two end pulleys 18 and is set in motion by the same two end pulleys 18. According to a preferred (but not limiting) embodiment, in each belt conveyor 16 an end pulley 18 is motorized (i.e. connected to an actuator to be set in rotation) while the other end pulley 18 is idle.

In the embodiment illustrated in the attached figures, each belt conveyor 16 of each initial portion 13 directly borders (i.e. without any interposed element) with the adjacent belt conveyor 16 of the corresponding final portion 14; in other words, between each belt conveyor 16 of each initial portion 13 and the adjacent belt conveyor 16 of the corresponding final portion 14, no connection element is interposed. In this embodiment, the lower end pulley 18 of each belt conveyor 16 of each initial portion 13 is placed as closely as possible (i.e. at a minimum distance which is adequately less than the diameter of the cigarettes and is generally sufficient to avoid contact, taking into account the manufacturing tolerances) to the upper end pulley 18 of the adjacent belt conveyor 16 of the corresponding final portion 14 so as to avoid the formation of gaps along the channels 12 in which the cigarettes can get stuck or trapped.

According to a different embodiment not illustrated, between each belt conveyor 16 of each initial portion 13 and the adjacent belt conveyor 16 of the corresponding final portion 14 a fixed side is interposed (that is, devoid of moving parts) which acts as a connection between the two conveyor belts 19 and it is preferably formed by a rigid element made of metal or plastic material.

According to a possible embodiment, each belt conveyor 16 comprises its own electric motor which is mechanically independent of the electric motors of the other belt conveyors 16; in this way, each belt conveyor 16 can potentially be operated at a different speed than the other belt conveyors 16. According to an alternative embodiment, the two belt conveyors 16 of each portion 13 or 14 of the same channel 12 share the same electric motor which actuates (by means of suitable mechanical transmissions) both the belt conveyors 16; in this way, each portion 13 or 14 can potentially be operated at a speed different than the other portions 13 and 14. According to an alternative embodiment, the four belt conveyors 16 of each channel 12 share the same electric motor which actuates (by means of suitable mechanical transmissions) all four belt conveyors 16; in this way, each channel 12 can potentially be operated at a different speed than the other channel 12. According to an alternative embodiment, the four belt conveyors 16 of the two initial portions 13 share the same electric motor which actuates (by suitable mechanical transmissions) all four belt conveyors 16 and the four belt conveyors 16 of the two final portions 14 sharing the same electric motor which actuates (by means of suitable mechanical transmissions) all four belt conveyors 16; in this way, the two initial portions 13 can potentially be operated at a speed different than the two final portions 14. According to an alternative embodiment, the eight belt conveyors 16 of the two channels 12 share the same electric motor which actuates (by means of suitable mechanical transmissions) all the eight belt conveyors 16; in this way, all the eight belt conveyors 16 of the two channels 12 must necessarily be actuated at the same speed.

According to a preferred embodiment, the hopper 5 is provided with sensors that detect the filling level of the hopper 5 (particularly in the lower part 9) and, as a function of the filling level of the hopper 5, the feeding speed of the conveyors 16, that make up the side walls of the channels 12, is adjusted. In combination or alternatively, the hopper 5 is provided with sensors that detect (directly or indirectly) the descent rate of the cigarettes along the channels 12 and according to the descent rate of the cigarettes along the channels 12 the feeding speed of the belt conveyors 16, that make up the side walls of the channels 12, is adjusted.

Preferably, the belt conveyors 16 have a continuous motion with variable speed (essentially as a function of the hourly productivity of the packing machine, i.e. the number of packs 1 of cigarettes produced in the time unit).

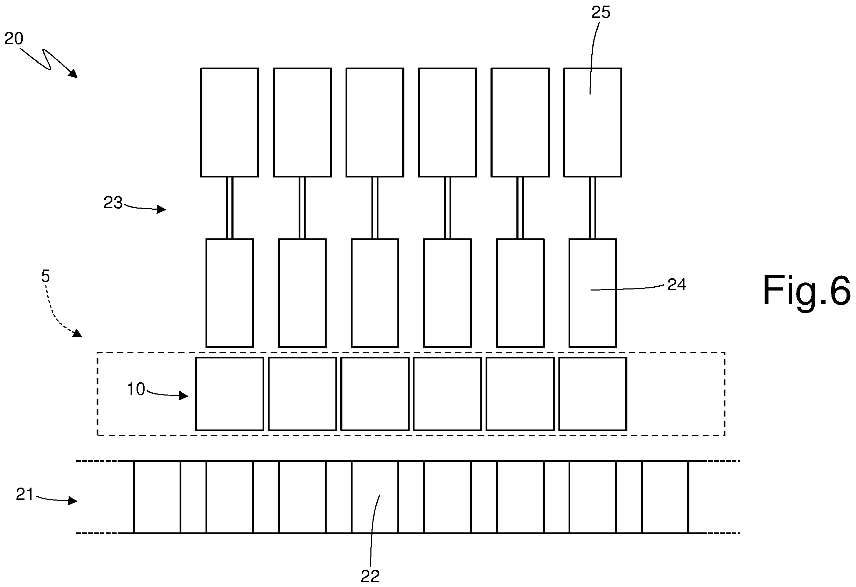

In Figure 6, number 20 denotes as a whole a unit for forming groups 4 of cigarettes which comprises the hopper 5 and is a part (in particular an initial part) of the packing machine which produces the packs 1 of cigarettes described above. The forming unit 20 comprises a forming belt conveyor 21 (only partially illustrated) which supports a series of trays 22, each of which is adapted to receive and house a corresponding group 4 of cigarettes. Moreover, the forming unit 20 comprises six extraction devices 23, each of which is coupled to a corresponding output mouth 10 of the hopper 5 and is adapted to cyclically extract a group 4 of cigarettes from the output mouth 10 to insert the group 4 of cigarettes in a corresponding tray 22 that is stationary in front of the output mouth 10. In the embodiment illustrated in Figure 6, each extraction device 23 comprises a comb-like pusher 24 which is adapted to fit inside a corresponding output mouth 10 and a linear electric motor 25 which moves the pusher 24 by cyclically imparting an alternate motion.

The packing machine comprises the forming unit 20 in which the groups 4 of cigarettes are formed in succession, a first wrapping unit in which, around each group 4 of cigarettes, a wrapping sheet is folded to form the corresponding inner wrap 3, a coupling unit in which, two by two, the inner wraps 3 (i.e. the groups 4 of cigarettes contained in the inner wraps 3) are coupled to form the content of the packs 1 of cigarettes, and a second wrapping unit in which around each pair of inner wraps 3 (i.e. to each pair of groups 4 of cigarettes contained in the inner wraps 3) a blank is folded to form the corresponding outer container 2.

In use, the hopper 5 is filled with cigarettes, which are fed by the feeding channel 7 through the upper input 6 and descend, due to gravity, along the hopper 5; gradually as the groups 4 of cigarettes are extracted from the outlet openings 10, the cigarettes descend, due to gravity, along the hopper 5 to replace the extracted cigarettes and new cigarettes are fed into the hopper 5 through the feeding channel 8.

The belt conveyors 16 are normally actuated so as to feed the corresponding conveyor belts 19 at a speed which is equal to the descend rate, due to gravity, of the cigarettes along the corresponding channels 12; in this way, the cigarettes moving along the channels 12 are synchronous with the side walls of the channels 12 (i.e. with the conveyor belts 19 of the belt conveyors 16 which make up the side walls of the channels 12) and therefore even if the side walls of the channels 12 touch, they are not subjected to any movement which tends to rotate the same upon themselves (i.e. the cigarettes do not roll against the side walls of the channels 12 as they move at the same speed as the side walls of the channels 12). In other words, the belt conveyors 16 are fed at a feeding speed which is concordant with the feeding speed of the cigarettes along the channel 12 so as to move in the same direction as the smoking articles and at the same feeding speed.

According to an alternative embodiment, the belt conveyors 16 are actuated to feed the corresponding conveyor belts 19 at a speed different than the descend rate, due to gravity, of the cigarettes along the corresponding channels 12 but, in any case the conveyor belts 19 move in concordant direction with the descent direction of the cigarettes along the corresponding channels 12. In this way, the difference in speed between the side walls of the channels 12 (i.e. the conveyor belts 19 of the belt conveyors 16 which make up the side walls of channels 12) and cigarettes moving along said channels 12 is reduced, but different from zero. A feeding speed of the conveyor belts 19 greater or less than the descending rate, due to gravity, of the cigarettes along the channels 12 can be usefully set, at given times, if it is necessary to accelerate or slow down, the descending flow of the mass of cigarettes, respectively.

When a cigarette rolls against a side wall of a channel 12, the cigarette itself may tend to lay *"crosswise",* i.e. to lay transversely in respect to the other cigarettes, particularly when the cigarette is "*short*" and/or has a given tapered shape (that is, when it does not have a perfectly constant diameter along its extension). Consequently, by preventing the cigarettes from rolling against the side walls of the channels 12 (i.e. against the conveyor belts 19 of the belt conveyors 16 which make up the side walls of the channels 12), the cigarettes themselves are prevented from laying in a crosswise direction inside the channels 12. As previously said, this result is obtained by advancing the side walls of the channels 12 (i.e. the conveyor belts 19 of the belt conveyors 16 which make up the side walls of the channels 12) at the same feeding speed (that is, the descent rate, due to gravity, along the channels 12) of the cigarettes.

The embodiments described herein can be combined one with the other without departing from the scope of protection of the present invention as defined by the appended claims. The packing machine described above has numerous advantages. Firstly, the hopper 5 of the packing machine described above enables a considerable reduction in the number of *"crosswise"* cigarettes along the channels 12, due to the advancement of the side walls of the channels 12 (i.e. the conveyor belts 19 of the belt conveyors 16 which make up the side walls of the channels 12) at the same feeding speed (that is, the descent rate, due to gravity, along the channels 12) of the cigarettes.

Moreover, the hopper 5 of the packing machine described above is relatively simple and compact and can be obtained by modifying an existing hopper with the sole addition of the belt conveyors 16.

The embodiment illustrated in the attached figures refers to the production of a pack of cigarettes, but the present invention can be applied without substantial modifications also concerns production of any other type of pack of smoking articles with a cylindrical shape (for example, a pack of cigars, a pack of liquid vaporizing type electronic cigarettes, a pack of new generation cigarettes without tobacco combustion...).

### LIST OF THE REFERENCE NUMBERS OF THE FIGURES

- 1: pack of cigarettes
- 2: outer container
- 3: inner wrap
- 4: group of cigarettes
- 5: hopper
- 6: upper input
- 7: feeding channel
- 8: upper part
- 9: lower part
- 10: output mouths
- 11: grooves
- 12: channels
- 13: initial portions
- 14: final portions
- 15: free chamber
- 16: belt conveyor
- 17: fixed profile
- 18: end pulleys
- 19: conveyor belt
- 20: forming unit
- 21: forming conveyor
- 22: trays
- 23: extraction devices
- 24: pusher
- 25: linear electric motor
- A: longitudinal axis

## Claims

1. A packing machine for producing a pack of smoking articles with a cylindrical shape and comprising: a horizontal feeding channel (7) and a forming unit (20) for forming groups (4) of smoking articles provided with a hopper (5) adapted to contain a compact mass of cigarettes; the hopper (5) has a vertical longitudinal axis (A) and comprises:
at least one group of grooves (11) within which the smoking articles are arranged in stacks and end in an output mouth (10), from which a group (4) of smoking articles can be extracted;
a free chamber (15) which is arranged above the grooves (11) and from which the smoking articles enter directly into the grooves (11) ;
an upper input (6) to which the smoking articles are fed by the horizontal feeding channel (7); and
two channels (12), which are distinct and placed in a mirrorlike manner relative to the vertical longitudinal axis (A), are arranged on the right and on the left, respectively, of the axis (A), and connect the upper input (6) to the free chamber (15);
wherein each channel (12) comprises an initial portion (13) and a final portion (14);
wherein the two initial portions (13) of the channels (12) diverge between one another from the top to the bottom and the two final portions (14) converge between one another from the top to the bottom; and
wherein each channel (12) is arranged higher than the output mouth (10) in the direction of the longitudinal axis (A), has a pair of opposite side walls against which, cylindrical side walls of the smoking articles rest, and along which the smoking articles descend, due to gravity, towards the output mouth (10) until reaching the free chamber (15) directly;
the packing machine is **characterized in that** the opposite side walls of the initial portion (13) of each channel (12) is defined by a pair of opposite first belt conveyors (16) and the opposite side walls of the final portion (14) of each channel (12) is defined by a pair of opposite second belt conveyors (16).

2. The packing machine according to claim 1, wherein each channel (12) forms an angle greater than 30° with the longitudinal axis (A).

3. The packing machine according to claim 2, wherein each channel (12) forms an angle of 45° with the longitudinal axis (A) .

4. The packing machine according to claim 1, 2 or 3, wherein each belt conveyor (16) of the initial portion (13) directly borders the adjacent belt conveyor (16) of the corresponding final portion (14).

5. The packing machine according to claim 1, 2 or 3, wherein a fixed edge is interposed between each belt conveyor (16) of the initial portion (13) and the adjacent belt conveyor (16) of the final portion (14), so as to act as a connection element between the two belt conveyors (16).

6. The packing machine according to one of the claims from 1 to 5, wherein two lower belt conveyors (16) of the initial portions (13) of the two channels (12) are connected to one another by a fixed profile (17) with a triangular shape, which is arranged immediately below an upper input (6) of the hopper (5)

7. A method to control the packing machine according to one of the claims from 1 to 6 and comprising feeding, in use, the belt conveyors (16) with a feeding direction that is concordant with a feeding direction of the smoking articles along the channel (12), so as to move in the same direction as the smoking articles.

8. The method according to claim 7 and comprising actuating, in use, the belt conveyors (16) so as to feed corresponding conveyor belts (19) at a speed which is equal to the descend rate, due to gravity, of the smoking articles along the channel (12), so as to move synchronously with the smoking articles.

## Patentansprüche

1. Verpackungsmaschine zum Produzieren einer Packung von Rauchartikeln mit einer zylindrischen Form und umfassend: einen horizontalen Zuführkanal (7) und eine Bildungseinheit (20) zum Bilden von Gruppen (4) von Rauchartikeln, die mit einem Trichter (5) versehen ist, der ausgelegt ist, eine kompakte Masse an Zigaretten aufzunehmen; wobei der Trichter (5) eine vertikale Längsachse (A) hat und umfasst:
wenigstens eine Gruppe von Rinnen (11), in denen die Rauchartikel in Stapeln angeordnet sind und die in einer Ausgabeöffnung (10) enden, aus der eine Gruppe (4) von Rauchartikeln entnommen werden kann;
eine freie Kammer (15), die über den Rinnen (11) angeordnet ist, und aus der die Rauchartikel direkt in die Rinnen (11) eintreten;
einen oberen Eingang (6), dem die Rauchartikel durch den horizontalen Zuführkanal (7) zugeführt werden; und
zwei Kanäle (12), die getrennt sind und relativ zur vertikalen Längsachse (A) spiegelbildlich angeordnet sind, die jeweils auf der rechten bzw. der linken Seite der Achse (A) angeordnet sind und den oberen Eingang (6) mit der freien Kammer (15) verbinden; wobei jeder Kanal (12) einen Anfangsabschnitt (13) und einen Endabschnitt (14) umfasst;
wobei die zwei Anfangsabschnitte (13) der Kanäle (12) von oben nach unten voneinander divergieren und die zwei Endabschnitte (14) von oben nach unten zueinander konvergieren; und
wobei jeder Kanal (12) in der Richtung der Längsachse (A) höher als die Ausgabeöffnung (10) angeordnet ist, ein Paar von gegenüberliegenden Seitenwänden hat, an denen die zylindrischen Seitenwände der Rauchartikel anliegen und längs derer die Rauchartikel aufgrund von Schwerkraft in Richtung der Ausgabeöffnung (10) absteigen, bis sie direkt die freie Kammer (15) erreichen;
wobei die Verpackungsmaschine **dadurch gekennzeichnet ist, dass** die gegenüberliegenden Seitenwände des Anfangsabschnitts (13) jedes Kanals (12) durch ein Paar von gegenüberliegenden ersten Förderbändern (16) definiert sind und die gegenüberliegenden Seitenwände des Endabschnitts (14) jedes Kanals (12) durch ein Paar von gegenüberliegenden zweiten Förderbändern (16) definiert sind.

2. Verpackungsmaschine nach Anspruch 1, wobei jeder Kanal (12) einen Winkel größer als 30° mit der Längsachse (A) bildet.

3. Verpackungsmaschine nach Anspruch 2, wobei jeder Kanal (12) einen Winkel von 45° mit der Längsachse (A) bildet.

4. Verpackungsmaschine nach Anspruch 1, 2 oder 3, wobei jedes Förderband (16) des Anfangsabschnitts (13) direkt an das angrenzende Förderband (16) des entsprechenden Endabschnitts (14) angrenzt.

5. Verpackungsmaschine nach Anspruch 1, 2 oder 3, wobei eine feste Kante zwischen jedem Förderband (16) des Anfangsabschnitts (13) und dem angrenzenden Förderband (16) des Endabschnitts (14) angeordnet ist, um als ein Verbindungselement zwischen den zwei Förderbändern (16) zu dienen.

6. Verpackungsmaschine nach einem der Ansprüche 1 bis 5, wobei zwei untere Förderbänder (16) der Anfangsabschnitte (13) der zwei Kanäle (12) durch ein festes Profil (17) mit einer Dreiecksform miteinander verbunden sind, das unmittelbar unterhalb eines oberen Eingangs (6) des Trichters (5) angeordnet ist.

7. Verfahren zum Steuern der Verpackungsmaschine nach einem der Ansprüche 1 bis 6 und umfassend im Einsatz das Vorschieben der Förderbänder (16) mit einer Vorschubrichtung, die mit einer Vorschubrichtung der Rauchartikel längs des Kanals (12) übereinstimmend ist, so dass sie sich in der gleichen Richtung wie die Rauchartikel bewegen.

8. Verfahren nach Anspruch 7 und umfassend im Einsatz das Betätigen der Förderbänder (16), um die jeweiligen Förderbänder (19) mit einer Geschwindigkeit vorzuschieben, die der Abstiegsgeschwindigkeit der Rauchartikel aufgrund von Schwerkraft längs des Kanals (12) gleicht, um sich synchron mit den Rauchartikeln zu bewegen.

## Revendications

1. Machine d'emballage pour produire un paquet d'articles à fumer avec une forme cylindrique et comprenant : un canal d'alimentation horizontal (7) et une unité de formation (20) pour former des groupes (4) d'articles à fumer pourvue d'une trémie (5) apte à contenir une masse compacte de cigarettes ; la trémie (5) comporte un axe longitudinal vertical (A) et comprend :
au moins un groupe de rainures (11) à l'intérieur desquelles les articles à fumer sont agencés en piles et se terminent dans une embouchure de sortie (10), de laquelle un groupe (4) d'articles à fumer peut être extrait ;
une chambre libre (15) qui est agencée au-dessus des rainures (11) et depuis laquelle les articles à fumer entrent directement dans les rainures (11) ;
une entrée supérieure (6) vers laquelle les articles à fumer sont alimentés par le canal d'alimentation horizontal (7) ; et
deux canaux (12), qui sont distincts et placés en miroir par rapport à l'axe longitudinal vertical (A), sont placés respectivement à droite et à gauche de l'axe (A), et relient l'entrée supérieure (6) à la chambre libre (15) ;
dans laquelle chaque canal (12) comprend une portion initiale (13) et une portion finale (14) ;
dans laquelle les deux portions initiales (13) des canaux (12) divergent l'une par rapport à l'autre de haut en bas et les deux portions finales (14) convergent l'une vers l'autre de haut en bas ; et
dans laquelle chaque canal (12) est agencé plus haut que l'embouchure de sortie (10) dans la direction de l'axe longitudinal (A), comporte une paire de parois latérales opposées contre lesquelles reposent des parois latérales cylindriques des articles à fumer et le long desquelles descendent les articles à fumer, par gravité, vers l'embouchure de sortie (10) jusqu'à atteindre directement la chambre libre (15) ;
la machine d'emballage est **caractérisée en ce que** les parois latérales opposées de la portion initiale (13) de chaque canal (12) sont définies par une paire de premiers convoyeurs à bande (16) opposés et les parois latérales opposées de la portion finale (14) de chaque canal (12) sont définies par une paire de deuxièmes convoyeurs à bande (16) opposés.

2. Machine d'emballage selon la revendication 1, dans laquelle chaque canal (12) forme un angle supérieur à 30° avec l'axe longitudinal (A).

3. Machine d'emballage selon la revendication 2, dans laquelle chaque canal (12) forme un angle de 45° avec l'axe longitudinal (A).

4. Machine d'emballage selon la revendication 1, 2 ou 3, dans laquelle chaque convoyeur à bande (16) de la portion initiale (13) borde directement le convoyeur à bande (16) adjacent de la portion finale (14) correspondante.

5. Machine d'emballage selon la revendication 1, 2 ou 3, dans laquelle un bord fixe est interposé entre chaque convoyeur à bande (16) de la portion initiale (13) et le convoyeur à bande (16) adjacent de la portion finale (14), de manière à servir d'élément de liaison entre les deux convoyeurs à bande (16).

6. Machine d'emballage selon l'une des revendications 1 à 5, dans laquelle deux convoyeurs à bande (16) inférieurs des portions initiales (13) des deux canaux (12) sont reliés l'un à l'autre par un profil fixe (17) de forme triangulaire, qui est agencé immédiatement au-dessous d'une entrée supérieure (6) de la trémie (5).

7. Procédé de commande de la machine d'emballage selon l'une des revendications 1 à 6 et comprenant d'alimentation, en utilisation, des convoyeurs à bande (16) dans une direction d'alimentation concordant avec une direction d'alimentation des articles à fumer le long du canal (12) de manière à se déplacer dans la même direction que les articles à fumer.

8. Procédé selon la revendication 7 et comprenant l'actionnement, en utilisation, des convoyeurs à bande (16) de manière à alimenter des convoyeurs à bande (19) correspondants à une vitesse égale au taux de descente, par gravité, des articles à fumer le long du canal (12) de manière à se déplacer synchroniquement avec les articles à fumer.
